# FASCICULE DE BREVET EUROPEEN

(11) **EP 2 794 153 B1**
(45) Date de publication et mention de la délivrance du brevet: **01.07.2020**
(21) Numéro de dépôt: 12812609.1
(22) Date de dépôt: 19.12.2012
(51) Int. Cl.: B22F 3/105, B29C 67/00, B23K 26/34, C04B 35/64

(54) **MACHINE ET PROCÉDÉ POUR LA FABRICATION ADDITIVE À BASE DE POUDRE**
MASCHINE UND VERFAHREN ZUM HERSTELLEN EINES AUF PULVER BASIERENDEN ZUSATZSTOFFS
MACHINE AND PROCESS FOR POWDER-BASED ADDITIVE MANUFACTURING

(30) Priorité: 20.12.2011 FR 1162067
(43) Date de publication de la demande: 29.10.2014
(73) Titulaire: Compagnie Générale des Etablissements Michelin, 63000 Clermont-Ferrand (FR)
(72) Inventeur: PIALOT, Frédéric, F-63040 Clermont-Ferrand Cedex 9 (FR); WALRAND, Gilles, F-63040 Clermont-Ferrand Cedex 9 (FR); WIEL, Pierre, F-63040 Clermont-Ferrand Cedex 9 (FR)
(74) Mandataire: Barascou, Frédéric
(86) Numéro de dépôt international: PCT/EP2012/076225
(87) Numéro de publication internationale: WO 2013/092757

(56) Documents cités:
- EP-A1- 1 234 625
- EP-A2- 1 700 686
- WO-A1-2008/061727
- WO-A2-2010/061174
- WO-A2-2011/007087

## Description

L'invention concerne les machines et les procédés pour la fabrication additive à base de poudre par frittage ou fusion des grains de ladite poudre à l'aide d'un faisceau énergétique comme un rayonnement électromagnétique (par exemple un faisceau laser) ou un faisceau de particules (par exemple un faisceau d'électrons).

Plus précisément, l'invention se rapporte aux moyens et aux procédés pour la mise en couche, c'est à dire pour la préparation du lit de poudre préalable au frittage ou à la fusion de ladite couche à l'aide du faisceau énergétique.

Le document EP-1641580-B1 divulgue en particulier un dispositif de mise en couche pour le frittage par laser de poudres (métalliques ou céramiques). Ce dispositif comprend un plateau d'alimentation permettant de stocker la poudre et de la délivrer en quantité contrôlée à un cylindre rainuré apte d'une part à transférer et répartir ladite quantité de poudre sur le plateau de dépôt lors d'un premier passage du cylindre sur la zone de travail et d'autre part à compacter la poudre par un mouvement de roulage du cylindre lors d'un deuxième passage. La poudre est ensuite soumise au faisceau laser. Un inconvénient de cette configuration est l'encombrement et le coût important du plateau d'alimentation. Un autre inconvénient vient du fait que la longueur de la zone de travail est limitée par le périmètre utile du cylindre.

Le document WO-2011/007087-A2 divulgue un dispositif de mise en couche pour la fusion par laser de poudres. Ce dispositif comprend un plateau d'alimentation permettant de stocker la poudre et de la délivrer en quantité contrôlée à un système de raclette apte à alimenter le plateau de dépôt et de cylindre(s) apte(s) à répartir et compacter ladite quantité de poudre sur le plateau de dépôt. La poudre est ensuite soumise au faisceau laser. Un inconvénient de cette configuration est l'encombrement et le coût important du plateau d'alimentation ainsi que la nécessaire complexité de la machine du fait du grand nombre d'outillages à contrôler (raclette, cylindre(s) de répartition et/ou de compactage, vérins des plateaux).

Le document US-2005/0263934-A1 divulgue un dispositif de mise en couche pour le frittage par laser de poudres. Ce dispositif comprend des moyens d'alimentation et de dosage permettant de délivrer la poudre en quantité contrôlée à proximité de la zone de travail. L'alimentation se fait par gravité à partir d'un stock de poudre placée au-dessus. Une raclette permet de régler l'épaisseur d'un tas de poudre qui est ensuite soumis à une opération de préchauffage. Un cylindre rotatif permet ensuite de transférer et répartir ladite quantité de poudre préchauffée sur la zone de travail. Une quantité de poudre peut également être déposée sur le capot du chariot emportant le cylindre d'un côté à l'autre de la zone de travail et ainsi n'être mise en œuvre qu'au cours du retour du cylindre. Un inconvénient de cette configuration est le risque qu'une partie (même infime) de la poudre soit retenue sur le capot et tombe ensuite dans la zone de travail lors du passage du chariot au-dessus le lit de poudre. Ce risque n'est pas acceptable dans le cadre d'une utilisation industrielle.

Le document WO-2010/061174 décrit un dispositif de mise en couche comprenant des moyens d'alimentation et des moyens de stockage prenant la forme d'une trémie mobile avec des moyens de dosage et des moyens de répartition. Selon un premier inconvénient, les moyens d'alimentation sont fixes. Selon un autre inconvénient, la trémie ne permet de recevoir qu'une quantité de poudre utile à la réalisation d'une seule couche de poudre.

Un problème supplémentaire communs aux différentes propositions de l'état de la technique est la difficulté et parfois l'impossibilité d'obtenir une épaisseur et une densité homogènes de la couche de poudre sur toute l'étendue (longueur, largeur) de la zone de travail.

L'invention a donc pour objectif de pallier l'un au moins des inconvénients décrits ci-dessus.

L'invention propose pour cela une machine pour la fabrication additive par frittage ou fusion de poudre à l'aide d'un faisceau énergétique agissant sur une couche de poudre dans une zone de travail, ladite machine comprenant un dispositif de mise en couche de ladite poudre, ledit dispositif comprenant des moyens de stockage de la poudre, des moyens de répartition de la poudre aptes à parcourir la zone de travail afin de répartir la poudre en une couche d'épaisseur finale adaptée à la fabrication additive, des moyens d'alimentation aptes à transférer la poudre des moyens de stockage aux moyens de répartition, des moyens de dosage aptes à contrôler la quantité de poudre transférée des moyens de stockage aux moyens de répartition, les moyens de stockage sont placés plus haut que la zone de travail, les moyens d'alimentation utilisent la gravité, et les moyens d'alimentation et les moyens de dosage sont mobiles avec les moyens de répartition, ladite machine étant caractérisée en ce que les moyens de stockage comprennent une trémie permettant de stocker une quantité de poudre suffisante pour réaliser les différentes couches de poudre utiles à la fabrication additive d'une pièce complète ou de plusieurs pièces complètes, ladite trémie étant mobile avec les moyens d'alimentation, les moyens de dosage et les moyens de répartition.

L'alimentation par gravité par le haut de la zone de travail et dans une quantité contrôlée par des moyens de dosage embarqués avec les moyens de répartition assurent une bien meilleure régularité du lit de poudre que les systèmes de l'état de la technique.

De préférence, les moyens de dosage comprennent un cylindre doseur rotatif pourvu d'au moins une cavité, de préférence une rainure apte à définir une dose de poudre lors du dosage.

Alternativement, les moyens de dosage comprennent une trappe coulissante.

De préférence, les moyens de répartition comprennent une raclette.

Alternativement, les moyens de répartition comprennent un cylindre répartiteur dont la hauteur est de préférence ajustable en fonction de sa position angulaire.

Selon un mode de réalisation préféré de l'invention, les moyens de répartition et les moyens de dosage utilisent un cylindre commun.

De préférence, la machine selon l'invention comprend en outre un rouleau de compactage dont le déplacement en translation est solidaire du déplacement des moyens de répartition.

L'invention propose également un procédé pour la fabrication additive par frittage ou fusion de poudre à l'aide d'un faisceau énergétique agissant sur une couche de poudre dans une zone de travail, ladite machine comprenant un dispositif de mise en couche de ladite poudre, ledit dispositif comprenant :
- des moyens de stockage de la poudre placés plus haut que la zone de travail,
- des moyens de répartition de la poudre aptes à parcourir la zone de travail afin de répartir la poudre en une couche d'épaisseur finale adaptée à la fabrication additive,
- des moyens d'alimentation aptes à transférer la poudre des moyens de stockage aux moyens de répartition,
- des moyens de dosage aptes à contrôler la quantité de poudre transférée des moyens de stockage aux moyens de répartition,
ledit procédé comprenant des étapes de mise en couche consistant successivement à :
- doser une quantité de poudre à transférer depuis les moyens de stockage,
- alimenter par gravité les moyens de répartition,
- répartir ladite quantité de poudre sur la zone de travail à l'aide des moyens de répartition,
ledit procédé étant caractérisé en ce que, les moyens de stockage comprenant une trémie permettant de stocker une quantité de poudre suffisante pour réaliser les différentes couches de poudre utiles à la fabrication additive d'une pièce complète ou de plusieurs pièces complètes, les moyens de stockage, les moyens d'alimentation et les moyens de dosage sont solidaires des moyens de répartition pendant que lesdits moyens de répartition parcourent la zone de travail.

L'invention sera mieux comprise grâce à la suite de la description, qui s'appuie sur les figures suivantes :
- La figure 1 est une vue schématique en coupe d'une machine selon l'état de la technique.
- La figure 2 est une vue schématique en coupe d'une machine selon un premier mode de réalisation de l'invention.
- La figure 3 est une vue schématique en coupe du dispositif de mise en couche d'une variante préférée de la machine de la figure 2.
- La figure 4 est une vue schématique en coupe du dispositif de mise en couche d'une machine selon un deuxième mode de réalisation de l'invention.
- La figure 5 est une vue schématique en coupe plus détaillée d'une variante préférée du dispositif de mise en couche de la figure 4.
- La figure 6 est une vue schématique en coupe du dispositif de mise en couche d'une machine selon un troisième mode de réalisation de l'invention.
- La figure 7 est une vue schématique en coupe plus détaillée d'une variante préférée du dispositif de mise en couche de la figure 6.
- La figure 8 est une vue schématique en coupe du dispositif de mise en couche d'une machine selon un quatrième mode de réalisation de l'invention.
- Les figures 9 à 12 sont des vues schématiques montrant le dispositif de mise en couche de la figure 8 au cours d'étapes successives du procédé de mise en couche.

Sur les différentes figures, les éléments identiques ou similaires portent les mêmes références. La description de leur structure et de leur fonction n'est donc pas systématiquement reprise.

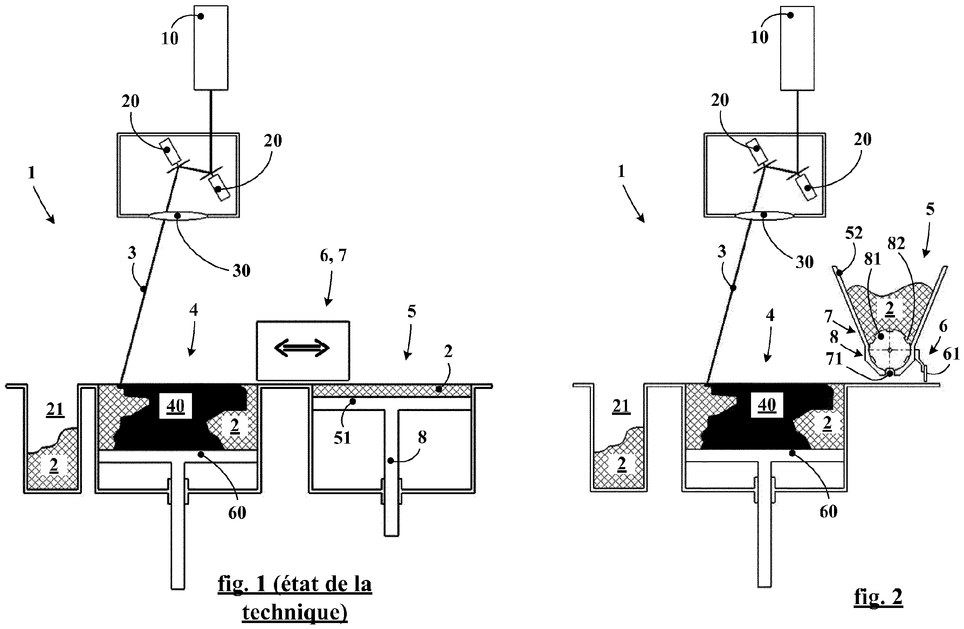

A la figure 1, on a représenté schématiquement une machine pour la fabrication additive d'une pièce 40 selon l'état de la technique. Une source énergétique, ici une source laser 10 émet un faisceau laser 3 dont l'orientation est contrôlée par des miroirs soumis à des galvanomètres 20. Une lentille optique 30 permet de focaliser le faisceau 3 au niveau de la zone de travail 4 afin de chauffer la couche supérieure de la poudre 2 selon un motif précis et ainsi réaliser de manière sélective la fusion de la poudre. Après le traitement par le faisceau d'une couche de poudre, le plateau de travail 60 est abaissé d'une épaisseur unitaire et recouvert d'une nouvelle couche de poudre et ainsi de suite afin de former couche après couche la pièce 40. Selon les types de faisceau énergétique et les poudres utilisés, l'épaisseur d'une couche de poudre peut varier de quelques micromètres (par exemple 10µm) à plusieurs centaines de micromètres (par exemple 500µm = 0.5 mm). Lorsque la pièce 40 est terminée c'est à dire lorsque les centaines ou les milliers de couches nécessaires à sa construction ont été successivement solidifiées, la pièce est évacuée de la zone de travail.

L'ensemble des éléments de la machine permettant l'application d'une nouvelle couche de poudre sur la zone de travail est généralement appelé « dispositif de mise en couche ». Le dispositif de mise en couche de l'état de la technique comprend des moyens de stockage 5 et des moyens de répartition 6 de la poudre 2 sur la zone de travail 4. Comme décrit plus haut, les moyens de stockage de l'état de la technique utilisent généralement un plateau mobile verticalement 51 similaire au plateau de travail 60. Les moyens de répartition 6 (non détaillés sur la figure 1) ont pour fonction de répartir une mince épaisseur de poudre sur l'ensemble de la zone de travail. Des moyens d'alimentation 7 (non détaillés sur la figure 1) ont pour fonction de transférer la poudre des moyens de stockage aux moyens de répartition 6. Les moyens de répartition et les moyens d'alimentation de l'état de la technique utilisent couramment des raclettes et/ou des rouleaux portés par un ou plusieurs chariots, lesdits chariots étant mobiles entre les moyens de stockage 5 et la zone de travail 4. Des moyens de dosage 8, ici des moyens permettant de contrôler précisément la montée du plateau mobile 51, permettent de contrôler la quantité de poudre mise en œuvre à chaque utilisation du dispositif de mise en couche. Lorsque les moyens de répartition ont franchi la zone de travail (vers la gauche de la figure 1), le surplus de poudre est poussé dans un bac de récupération 21.

La figure 2 représente un premier mode de réalisation de la machine 1 selon l'invention et en particulier de son dispositif de mise en couche. La source et le contrôle du faisceau énergétique sont représentés identiques à l'état de la technique. Ceci n'est qu'un exemple. Comme décrit au préambule de la demande, l'invention s'applique en réalité à tous les types de fabrication additive à base de poudre par frittage ou par fusion totale des grains de ladite poudre à l'aide d'un faisceau énergétique comme un rayonnement électromagnétique (par exemple un faisceau laser) ou un faisceau de particules (par exemple un faisceau d'électrons). La suite de la présente description se concentre donc principalement sur le procédé et le dispositif de mise en couche.

Les moyens de stockage 5 ont la forme d'une trémie 52 placée au-dessus du plan de la zone de travail 4. Les moyens de répartition 6 utilisent une raclette 61. La raclette est solidaire de la trémie. Les moyens d'alimentation 7 utilisent simplement une ouverture inférieure 71 de la trémie pour transférer par gravité la poudre vers les moyens de répartition 6. Des moyens de dosage, sous la forme d'un cylindre doseur rotatif 81 comprenant au moins une cavité, permettent de contrôler la quantité de poudre transférée. Ladite cavité, de préférence une rainure 82, définit une dose reproductible de poudre. La ou les rainures(s) 82 s'étend(ent) sensiblement sur toute la longueur utile du cylindre doseur 81, c'est à dire sensiblement sur toute la largeur de la zone de travail 4. Les dimensions et la forme de la section des rainures 82 peuvent varier le long du cylindre 81 afin d'améliorer encore la répartition de la poudre sur toute la zone de travail.

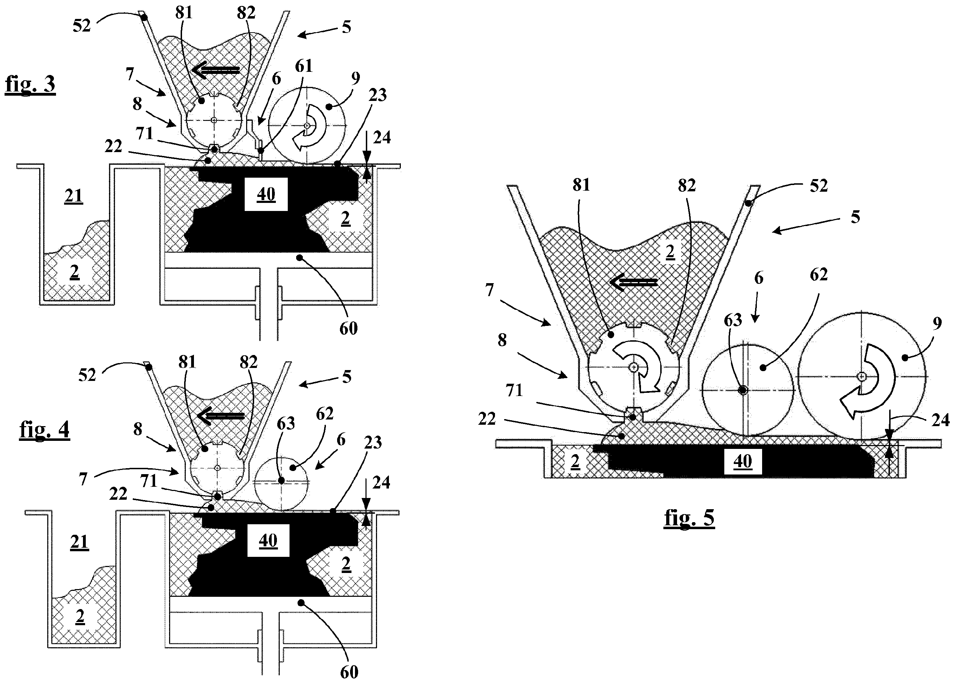

A la figure 3, on a représenté le dispositif de la figure 2 pendant l'opération de mise en couche. De manière générale dans la présente demande comme souvent dans les documents de l'état de la technique, les épaisseurs de poudre sont représentées très amplifiées afin d'être simplement visible du lecteur. Il est en effet impossible de représenter par exemple une épaisseur de 50 µm et une zone de travail de 500 mm de longueur sur le même dessin en respectant fidèlement les proportions.

A la figure 3, la trémie 52 se déplace vers la gauche de la figure en même temps que la raclette 61. La raclette répartit et lisse la couche de poudre sur la zone de travail 4. Le tas 22 de poudre situé devant la raclette est dosé par le cylindre doseur 81. L'apport de poudre peut se faire en une seule fois pour chaque couche. Cependant, de préférence, le dosage est progressif, c'est à dire que l'apport de poudre est réalisé progressivement en délivrant plusieurs fois le contenu d'une rainure au cours de la traversée de la zone de travail, ce qui permet de réduire la variabilité des conditions de travail de la raclette et donc de garantir une meilleure régularité de l'épaisseur et de la compacité du lit de poudre obtenu.

La figure 3 illustre en outre une variante préférée du premier mode de réalisation de l'invention dans laquelle on utilise en outre un rouleau de compactage 9. L'épaisseur finale 24 de la couche 23 de poudre est donc le résultat de deux opérations successives. Une première épaisseur est définie par les moyens de répartition 6, ici la raclette 61. Cette épaisseur est ensuite réduite et rendue encore plus homogène par l'action du rouleau de compactage 9. Le rouleau se déplace avec la trémie et la raclette. De préférence encore, le rouleau est contre-rotatif, c'est à dire qu'il est motorisé de manière à tourner dans le sens inverse de son déplacement relativement au lit de poudre (comme symbolisé par la flèche qui montre une rotation dans le sens horaire alors que le rouleau se déplace vers la gauche).

A la figure 4, on a représenté un deuxième mode de réalisation du dispositif de mise en couche dans lequel les moyens de répartition 6 utilisent un cylindre répartiteur 62 en lieu et place de la raclette du premier mode de réalisation. Le déplacement du cylindre répartiteur 62 est lié à celui de la trémie 51, comme pour de la raclette 61 du premier mode de réalisation. Le cylindre 62 peut être fixe en rotation ou contre-rotatif. Lorsque le cylindre répartiteur est fixe, sa fixation 63 est de préférence excentrique ce qui permet de régler finement sa hauteur et donc l'épaisseur finale 24 de la couche de poudre 23 obtenue.

Comme représenté à la figure 5, un rouleau de compactage 9 contre-rotatif peut avantageusement être associé au dispositif de mise en couche selon le deuxième mode de réalisation dans les mêmes conditions que décrit plus haut en référence à la figure 3.

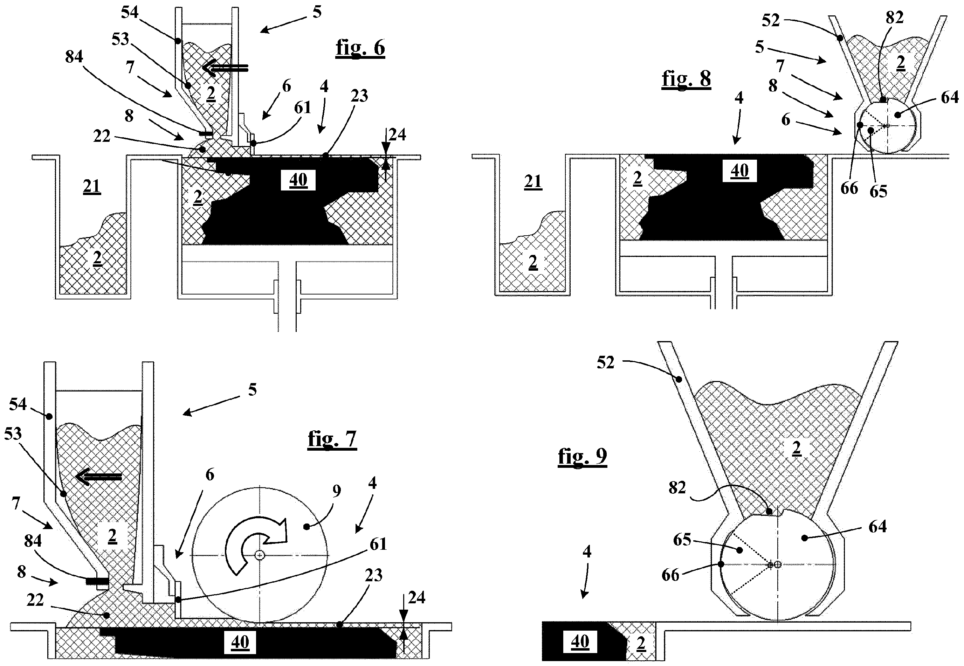

La figure 6 représente un troisième mode de réalisation. Il diffère principalement du premier mode en ce que les moyens de dosage 8 utilisent une trappe coulissante 84 dont la durée et l'amplitude de l'ouverture conditionne la quantité de poudre transférée aux moyens de répartition 6. De préférence, les moyens de stockage 5 utilisent une trémie souple 53 porté par un support de trémie 54 afin de réduire le risque de colmatage de la poudre. Selon les types de poudre utilisés, des moyens de décolmatage actifs supplémentaires (non représentés) peuvent être mis en œuvre.

A la figure 7, on a représenté une variante du troisième mode de réalisation comprenant en outre un rouleau de compactage 9 contre-rotatif dont les déplacements sont solidaires de la raclette et de la trémie tel que décrit plus haut en référence à la figure 3.

La figure 8 représente un quatrième mode de réalisation du dispositif de mise en couche selon l'invention dans lequel les moyens de dosage 8 et les moyens de répartition 6 utilisent un cylindre rotatif commun 64. La fonction de dosage est assurée grâce à une rainure 82 du cylindre commun 64 selon le principe décrit plus haut en référence à la figure 2. La fonction de répartition est assurée par un secteur lisseur 65 du cylindre commun 64 selon le principe décrit plus haut en référence à la figure 4. Un avantage de ce mode de réalisation est qu'il permet d'alléger encore le dispositif de mise en couche de la machine selon l'invention. De préférence, le cylindre commun 64 est fixe en rotation lors de son déplacement sur la zone de travail. Le secteur lisseur 65, c'est à dire la partie du cylindre commun destinée à la répartition de la poudre est symboliquement délimité par des traits pointillés sur les figures 8 à 12. De préférence, ce secteur comporte un renflement 66. Ce renflement de faible hauteur dans l'absolu (par exemple quelques dixièmes de millimètres tout au plus) est à peine perceptible sur les figures malgré son amplification.

Le fonctionnement de ce mode de réalisation est détaillé aux figures 9 à 12 qui montrent les configurations successives du dispositif lors d'un cycle de mise en couche.

A la figure 9, le dispositif de mise en couche est dans une configuration d'attente, comme par exemple entre deux couches successives. La poudre 2 est retenue dans la trémie 52 fermée par le contact hermétique du cylindre commun 64. La rainure 82 peut se charger de poudre.

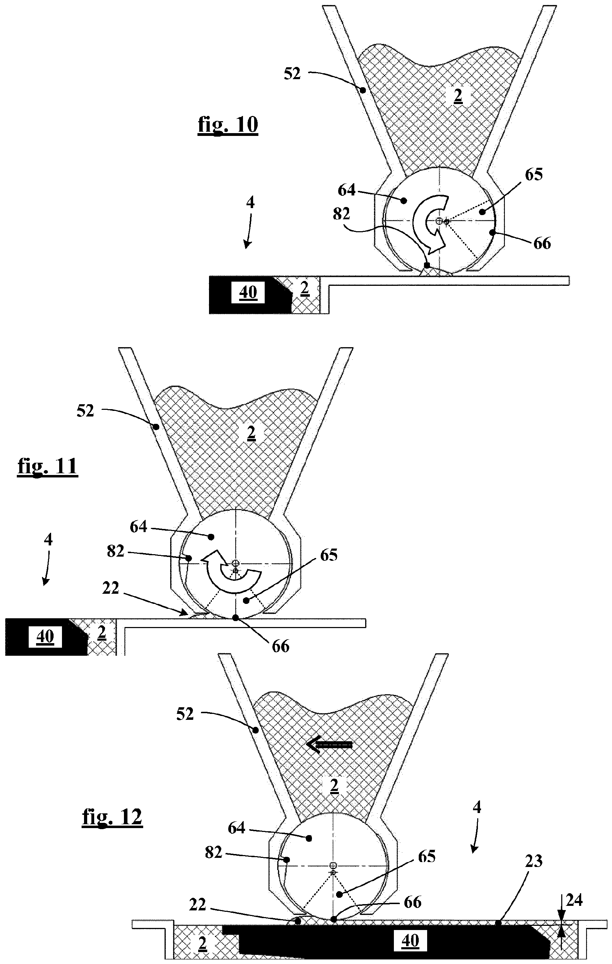

A la figure 10, le cylindre commun 64 a tourné d'environ un demi-tour dans le sens anti-horaire et déposé une dose de poudre à proximité de la zone de travail 4.

A la figure 11, le cylindre commun 64 a tourné d'environ un quart de tour dans le sens horaire afin d'amener le secteur lisseur 65 au contact du tas de poudre 22 et à la hauteur appropriée. Le fait que le secteur lisseur comporte un renflement 66 permet de régler finement l'épaisseur de lissage par le choix de l'angle adopté par le cylindre commun 64.

A la figure 12, le dispositif de mise en couche traverse la zone de travail 4 comme décrit précédemment en poussant le tas de poudre 22 au-dessus de la pièce 40 pour lisser une couche de poudre 23 d'épaisseur finale 24. Afin de limiter les variations de pression sur toute la longueur de la zone de travail, la phase d'alimentation décrite aux figures 9 et 10 peut être répétée une ou plusieurs fois au cours d'une seule traversée de la zone de travail, auquel cas la dose définie par la rainure 82 représente de préférence une fraction de la quantité de poudre nécessaire pour une couche complète.

Alternativement, la phase de dépôt de poudre peut être réalisée plusieurs fois de suite sans mouvement de lissage afin de créer dans la configuration de la figure 10 un tas 22 correspondant à plusieurs doses unitaires telles que définie par la rainure 82.

Rappelons que (comme expliqué plus haut) les épaisseurs des couches, les volumes des tas, des rainures ou du renflement 66 ne sont pas représentés à une échelle cohérente mais au contraire volontairement faussée dans le but de rendre les figures lisibles.

Bien sûr, comme décrit plus haut pour les autres modes de réalisation de l'invention (voir par exemple celui de la figure 7) le dispositif de mise en couche des figures 8 à 12 peut de préférence comprendre en outre un rouleau compacteur contre-rotatif (non représenté ici) dont le déplacement est solidaire du déplacement des moyens d'alimentation et des moyens de dosage, c'est à dire ici de la trémie 52 et du cylindre commun 64.

Alternativement, le secteur lisseur 65 du cylindre commun 64 peut présenter une réduction de rayon au lieu de l'augmentation de rayon (renflement 66) représentée et décrite en référence aux figures 9 à 12. Qu'il s'agisse d'une augmentation ou d'une réduction de rayon, c'est cette variation de rayon qui permet l'ajustage de la hauteur du cylindre (et donc le réglage fin de l'épaisseur de lissage) par le choix de l'angle adopté par le cylindre commun 64.

On comprend qu'une couche peut être réalisée selon l'invention en un seul passage, c'est à dire en une seule traversée de la zone de travail. La quantité de poudre stockée dans la trémie est suffisante pour réaliser des centaines, voire des milliers de couches c'est à dire que la machine pourrait réaliser la fabrication additive d'une pièce complète, voire de plusieurs pièces complète sans recharger la trémie. De préférence le rechargement de la trémie est réalisé au moment où la fabrication d'une pièce est terminée et que la pièce finie est évacuée avant qu'une nouvelle fabrication commence.

La poudre utilisée est de préférence une poudre métallique ou céramique. Selon les types de faisceaux énergétiques mis en œuvre et selon l'épaisseur de la couche finale visée, le diamètre moyen des particules de la poudre peut varier de quelques microns (par exemple 5 µm) à 300 ou 400 µm.

L'homme du métier comprend que les différents modes de réalisation décrits et illustrés ici sont des exemples particuliers de combinaisons de moyens selon l'invention. D'autres combinaisons ou substitutions évidentes des différents moyens font également partie de l'invention comme par exemple le remplacement dans le troisième mode de réalisation (figures 6 et 7) de la raclette 61 par un cylindre répartiteur 62 selon le deuxième mode de réalisation des figures 4 et 5.

## Revendications

1. Machine (1) pour la fabrication additive par frittage ou fusion de poudre (2) à l'aide d'un faisceau énergétique (3) agissant sur une couche de poudre (23) dans une zone de travail (4), ladite machine comprenant un dispositif de mise en couche de ladite poudre, ledit dispositif comprenant :
• des moyens de stockage (5) de la poudre,
• des moyens de répartition (6) de la poudre aptes à parcourir la zone de travail afin de répartir la poudre en une couche (23) d'épaisseur finale (24) adaptée à la fabrication additive,
• des moyens d'alimentation (7) aptes à transférer la poudre des moyens de stockage (5) aux moyens de répartition (6),
• des moyens de dosage (8) aptes à contrôler la quantité de poudre transférée des moyens de stockage (5) aux moyens de répartition (6),
• les moyens de stockage (5) sont placés plus haut que la zone de travail (4),
• les moyens d'alimentation (7) utilisent la gravité, et
• les moyens d'alimentation (7) et les moyens de dosage (8) sont mobiles avec les moyens de répartition (6),
ladite machine étant **caractérisée en ce que** les moyens de stockage comprennent une trémie (52; 53) permettant de stocker une quantité de poudre suffisante pour réaliser les différentes couches de poudre utiles à la fabrication additive d'une pièce complète ou de plusieurs pièces complètes, ladite trémie étant mobile avec les moyens d'alimentation (7), les moyens de dosage (8) et les moyens de répartition (6).

2. Machine selon la revendication 1, dans laquelle les moyens de dosage comprennent un cylindre doseur rotatif (81) pourvu d'au moins une cavité, de préférence une rainure (82) apte à définir une dose de poudre lors du dosage.

3. Machine selon la revendication 1, dans laquelle les moyens de dosage comprennent une trappe coulissante (84).

4. Machine selon l'une des revendications précédentes, dans laquelle les moyens de répartition (6) comprennent une raclette (61).

5. Machine selon l'une des revendications 1 à 3, dans laquelle les moyens de répartition (6) comprennent un cylindre répartiteur (62).

6. Machine selon la revendication 5, dans laquelle la hauteur du cylindre répartiteur (62) est ajustable en fonction de la position angulaire dudit cylindre.

7. Machine selon les revendications 2 et 5, dans laquelle les moyens de répartition et les moyens de dosage utilisent un cylindre commun (64).

8. Machine selon l'une des revendications précédentes comprenant en outre un rouleau de compactage (9) dont le déplacement en translation est solidaire du déplacement des moyens de répartition.

9. Procédé pour la fabrication additive par frittage ou fusion de poudre (2) à l'aide d'un faisceau énergétique (3) agissant sur une couche de poudre (23) dans une zone de travail (4), ladite machine comprenant un dispositif de mise en couche de ladite poudre, ledit dispositif comprenant :
• des moyens de stockage (5) de la poudre placés plus haut que la zone de travail (4),
• des moyens de répartition (6) de la poudre aptes à parcourir la zone de travail afin de répartir la poudre en une couche (23) d'épaisseur finale (24) adaptée à la fabrication additive,
• des moyens d'alimentation (7) aptes à transférer la poudre des moyens de stockage (5) aux moyens de répartition (6),
• des moyens de dosage (8) aptes à contrôler la quantité de poudre transférée des moyens de stockage (5) aux moyens de répartition (6),
ledit procédé comprenant des étapes de mise en couche consistant successivement à :
• doser une quantité de poudre à transférer depuis les moyens de stockage (5),
• alimenter par gravité les moyens de répartition (6),
• répartir ladite quantité de poudre sur la zone de travail à l'aide des moyens de répartition (6),
ledit procédé étant **caractérisé en ce que,** les moyens de stockage comprenant une trémie (52; 53) permettant de stocker une quantité de poudre suffisante pour réaliser les différentes couches de poudre utiles à la fabrication additive d'une pièce complète ou de plusieurs pièces complètes, les moyens de stockage, les moyens d'alimentation et les moyens de dosage sont solidaires des moyens de répartition pendant que lesdits moyens de répartition parcourent la zone de travail.

## Patentansprüche

1. Maschine (1) zur additiven Fertigung durch Sintern oder Schmelzen von Pulver (2) mithilfe eines Energiestrahls (3), der auf eine Schicht aus Pulver (23) in einem Arbeitsbereich (4) einwirkt, die Maschine umfassend eine Vorrichtung zur Ausbreitung des Pulvers zu einer Schicht, die Vorrichtung umfassend:
• Mittel zur Lagerung (5) des Pulvers,
• Mittel zum Verteilen (6) des Pulvers, die geeignet sind, den Arbeitsbereich abzufahren, um das Pulver zu einer Schicht (23) mit einer endgültigen Dicke (24) zu verteilen, die an die additive Fertigung angepasst ist,
• Zufuhrmittel (7), die geeignet sind, das Pulver von den Mitteln zur Lagerung (5) zu den Mitteln zum Verteilen (6) zu übertragen,
• Dosierungsmittel (8), die geeignet sind, die Pulvermenge zu steuern, die von den Mitteln zur Lagerung (5) zu den Mitteln zum Verteilen (6) übertragen wird,
• die Mittel zur Lagerung (5) sind höher als der Arbeitsbereich (4) platziert,
• die Zufuhrmittel (7) nutzen die Schwerkraft, und
• die Zufuhrmittel (7) und die Dosierungsmittel (8) sind mit den Mitteln zum Verteilen (6) beweglich,
wobei die Maschine **dadurch gekennzeichnet ist, dass** die Mittel zur Lagerung einen Trichter (52; 53) umfassen, der es gestattet, eine ausreichende Menge von Pulver zu lagern, um die verschiedenen Pulverschichten zu erzeugen, die für die additive Fertigung eines vollständigen Teils oder mehrerer vollständiger Teile dienlich sind, wobei der Trichter mit den Zufuhrmitteln (7), den Dosierungsmitteln (8) und den Mitteln zum Verteilen (6) beweglich ist.

2. Maschine nach Anspruch 1, wobei die Dosierungsmittel einen drehbaren Dosierungszylinder (81) umfassen, der mit mindestens einem Hohlraum versehen ist, vorzugsweise einer Rille (82), die geeignet ist, bei der Dosierung eine Pulverdosis zu definieren.

3. Maschine nach Anspruch 1, wobei die Dosierungsmittel eine verschiebbare Tür (84) umfassen.

4. Maschine nach einem der vorhergehenden Ansprüche, wobei die Mittel zum Verteilen (6) einen Schaber (61) umfassen.

5. Maschine nach einem der Ansprüche 1 bis 3, wobei die Mittel zum Verteilen (6) einen Verteilungszylinder (62) umfassen.

6. Maschine nach Anspruch 5, wobei die Höhe des Verteilungszylinders (62) in Abhängigkeit von der Winkelposition des Zylinders einstellbar ist.

7. Maschine nach den Ansprüchen 2 und 5, wobei die Mittel zum Verteilen und die Dosierungsmittel einen gemeinsamen Zylinder (64) nutzen.

8. Maschine nach einem der vorhergehenden Ansprüche, ferner umfassend eine Verdichtungswalze (9), deren Translationsbewegung integral mit der Bewegung der Mittel zum Verteilen ist.

9. Verfahren zur additiven Fertigung durch Sintern oder Schmelzen von Pulver (2) mithilfe eines Energiestrahls (3), der auf eine Schicht aus Pulver (23) in einem Arbeitsbereich (4) einwirkt, die Maschine umfassend eine Vorrichtung zur Ausbreitung des Pulvers zu einer Schicht, die Vorrichtung umfassend:
• Mittel zur Lagerung (5) des Pulvers, die höher als der Arbeitsbereich (4) platziert sind,
• Mittel zum Verteilen (6) des Pulvers, die geeignet sind, den Arbeitsbereich abzufahren, um das Pulver zu einer Schicht (23) mit einer endgültigen Dicke (24) zu verteilen, die an die additive Fertigung angepasst ist,
• Zufuhrmittel (7), die geeignet sind, das Pulver von den Mitteln zur Lagerung (5) zu den Mitteln zum Verteilen (6) zu übertragen,
• Dosierungsmittel (8), die geeignet sind, die Pulvermenge zu steuern, die von den Mitteln zur Lagerung (5) zu den Mitteln zum Verteilen (6) übertragen wird, das Verfahren umfassend Schritte des Ausbreitens zu einer Schicht, die darin bestehen, nacheinander:
• eine Menge von Pulver zu dosieren, die von den Mitteln zur Lagerung (5) zu übertragen sind,
• die Mittel zum Verteilen (6) durch Schwerkraft zu versorgen,
• die Menge von Pulver auf dem Arbeitsbereich mithilfe der Mittel zum Verteilen (6) zu verteilen,
wobei das Verfahren **dadurch gekennzeichnet ist, dass**, die Mittel zur Lagerung umfassend einen Trichter (52; 53), der es gestattet, eine ausreichende Menge von Pulver zu lagern, um die verschiedenen Pulverschichten zu erzeugen, die für die additive Fertigung eines vollständigen Teils oder mehrerer vollständiger Teile dienlich sind, die Mittel zur Lagerung, die Zufuhrmittel und die Dosierungsmittel mit den Mitteln zum Verteilen integral sind, während die Mittel zum Verteilen den Arbeitsbereich abfahren.

## Claims

1. Machine (1) for additive manufacturing by sintering or melting powder (2) using an energy beam (3) acting on a powder layer (23) in a working zone (4), said machine comprising a device for producing a layer of said powder, said device comprising:
• means (5) for storing the powder,
• means for distributing (6) the powder able to travel over the working zone in order to distribute the powder in a layer (23) having a final thickness (24) adapted to additive manufacturing,
• feeding means (7) able to transfer the powder from the storage means (5) to the distributing means (6),
• dosing means (8) able to control the quantity of powder transferred from the storage means (5) to the distributing means (6),
• the storage means (5) are located above the working zone (4),
• the feeding means (7) utilise gravity, and
• the feeding means (7) and the dosing means (8) are able to move with the distributing means (6),
said machine being **characterised in that** the storage means comprise a hopper (52; 53) able to store a quantity of powder sufficient to produce the different layers of powder required to the additive manufacturing of a single complete component or of a plurality of complete components, said hopper being able to move with the feeding means (7), the dosing means (8) and the distributing means (6).

2. Machine according to Claim 1, in which the dosing means comprise a rotating dosing cylinder (81) provided with at least one cavity, preferably a groove (82) capable of defining a dose of powder during dosing.

3. Machine according to Claims 1, in which the dosing means comprise a sliding trapdoor (84).

4. Machine according to one of the preceding claims, in which the distributing means (6) comprise a scraper (61).

5. Machine according to one of Claims 1 to 3, in which the distributing means (6) comprise a distribution cylinder (62).

6. Machine according to Claim 5, in which the height of the distribution cylinder (62) is adjustable according to the angular position of said cylinder.

7. Machine according to Claims 2 and 5, in which the distributing means and the dosing means utilise a common cylinder (64).

8. Machine according to one of the preceding claims, comprising in addition a compacting roller (9) of which the displacement in translation is integral with the displacement of the distributing means.

9. Process for additive manufacturing by sintering or melting powder (2) using an energy beam (3) acting on a powder layer (23) in a working zone (4), said machine comprising a device for layering said powder, said device comprising:
• means (5) for storing the powder located above the working zone (4),
• means for distributing (6) the powder able to travel over the working zone in order to distribute the powder in a layer (23) having a final thickness (24) adapted to additive manufacturing,
• feeding means (7) able to transfer the powder from the storage means (5) to the distributing means (6),
• dosing means (8) able to control the quantity of powder transferred from the storage means (5) to the distributing means (6),
said process comprising layering stages consisting successively of:
• dosing a quantity of powder to be transferred from the storage means (5),
• feeding the distributing means (6) by gravity,
• distributing said quantity of powder on the working zone using the distributing means (6),
said process being **characterised in that,** the storage means comprising a hopper (52; 53) able to store a quantity of powder sufficient to produce the different layers of powder required to the additive manufacturing of a single complete component or of a plurality of complete components, the storage means, the feeding means and the dosing means are integral with the distributing means, while said distributing means travel over the working zone.
